(19) Europäisches Patentamt
European Patent Office
Office européen des brevets

(11) **EP 3 365 573 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16785365.4**

(22) Anmeldetag: **27.09.2016**

(51) Int Cl.:
*F16C 27/02* (2006.01)     *F16C 33/20* (2006.01)
*F16C 33/28* (2006.01)     *F16C 33/74* (2006.01)

(86) Internationale Anmeldenummer:
**PCT/EP2016/072990**

(87) Internationale Veröffentlichungsnummer:
**WO 2017/067759 (27.04.2017 Gazette 2017/17)**

(54) **GLEITLAGERBUCHSE MIT INTEGRIERTER DICHTLIPPE**

PLAIN BEARING BUSH COMPRISING AN INTEGRATED SEALING LIP

DOUILLE DE PALIER LISSE MUNIE D'UNE LÈVRE D'ÉTANCHÉITÉ INTÉGRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2015 DE 102015117754**

(43) Veröffentlichungstag der Anmeldung:
**29.08.2018 Patentblatt 2018/35**

(73) Patentinhaber: **Federal-Mogul Deva GmbH**
**35260 Stadtallendorf (DE)**

(72) Erfinder:
• **MÜLLER-BRODMANN, Martin**
**35096 Weimar (DE)**
• **WERNER, Tobias**
**35043 Marburg (DE)**
• **ZEISCHKE, Matthias**
**61362 Bad Homburg (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
DE-A1-102007 036 017     JP-B2- 3 770 714
US-A- 3 527 507     US-A- 5 018 752
US-B2- 8 770 844

EP 3 365 573 B1

**Beschreibung**

Die Erfindung betrifft eine Gleitlagerbuchse gemäß dem Oberbegriff des Anspruchs 1, ein Verfahren zur Herstellung einer Gleitlagerbuchse und Verwendungen der Gleitlagerbuchse.

Derartige Gleitlagerbuchsen werden unter anderem in Maschinen eingesetzt, die sich im Betrieb in einer Fremdpartikel aufweisenden Umgebung befinden. Solche Fremdpartikel können zwischen die Gleitlagerbuchse und eine von der Gleitlagerbuchse geführten Welle eindringen und dementsprechend das Tribosystem durch Furchungsverschleiß zusätzlich beeinträchtigen oder sogar beschädigen.

Um solche Beeinträchtigungen durch Fremdpartikel auszuschließen oder zumindest deutlich zu verringern, werden üblicherweise zusätzlich zum eigentlichen Gleitlager Dichtungen (z.B. Wellendichtringe) eingesetzt, die auf die jeweiligen Betriebsbedingungen abgestimmt sind. Hierzu bieten die Lagerhersteller Systemlösungen an, bei denen Dichtungen in entsprechend vorher bearbeiteten Aussparungen am Innenumfang der Lagerenden eingesetzt werden, was beispielsweise in DE 34 125 62 C2 und DE 44 01 526 C1 erläutert wird.

Nachteilig bei diesen beiden Ausführungen sind die Beschaffung der zusätzlichen Bauteile, deren Montage und die Tatsache, dass solche Dichtungselemente häufig nicht jene niedrigen Reibungskoeffizienten aufweisen können, wie die Gleitschicht eines Verbundgleitlagers. Außerdem sind vergleichsweise große Wanddicken erforderlich, um die erforderlichen Aussparungen einbringen zu können. Auch die einzusetzenden Dichtelemente erfordern eine bestimmte Mindestmaterialdicke von ca. 4 bis 5 mm.

Aus der US 8,770,844 B2 ist eine Gleitlagerbuchse bekannt, die aus Vollmaterial aus einem faserverstärkten Epoxidmaterial besteht. Die Gleitlagerbuchse wird durch Formpressen und maschinelles Bearbeiten hergestellt. An den Buchsenenden sind nach innen vorstehende Dichtlippen angeformt bzw. herausgearbeitet, die konische Innen- und Außenflächen aufweisen. In den Stirnflächen können Ringnuten vorgesehen sein. Da die Gleitlagerbuchsen nur aus einem Material bestehen, ist aus Stabilitätsgründen eher eine große Wanddicke erforderlich. Diese Gleitlagerbuchsen weisen einen Innendurchmesser von ca. 30 mm auf und werden deshalb insbesondere nur in Scharniergelenken eingesetzt.

US 3 527 507 A offenbart ein einstückiges und zylindrisches Lagerelement für einen sich hin und her bewegenden oder rotierenden Stab oder Kolben oder Ähnliches, der aus einem steifen Kunststoff gebildet ist und einen zylindrischen Körperabschnitt aufweist, wobei der zylindrische Körperabschnitt eine integrale, ringförmig entlang einer Achse erweiterte Abdichtlippe aufweist.

US 5 018 752 A offenbart eine Gleitringdichtung, die einen generell tubusförmigen, hohlen Körper umfasst, der aus Kunststoff gebildet ist und eine Lippendichtung an jedem Ende aufweist. Nuten in dem Körper ermöglichen, dass die Lippendichtungen an der Innenfläche des Körpers mit einer sich durch den Dichtungskörper erstreckenden Welle in eine abdichtende Einstellung gebracht werden.

Es ist daher Aufgabe der Erfindung, eine stabilere Gleitlagerbuchse bereitzustellen, bei der das Eindringen von Fremdpartikeln in den Innenraum der Gleitlagerbuchse im Betrieb mit einer Welle auf einfache Weise verhindert werden kann. Es ist auch Aufgabe der Erfindung, ein Verfahren zur Herstellung solcher Gleitlagerbuchsen anzugeben.

Diese Aufgabe wird mit einer Gleitlagerbuchse mit den Merkmalen des Anspruchs 1 sowie mit einem Verfahren mit den Merkmalen des Anspruchs 11 gelöst.

Durch das Vorsehen einer Tragschicht in Verbindung mit einer Ringnut zwischen Tragschicht und Gleitschicht erfolgt eine funktionale Trennung. Den Anforderungen an Belastbarkeit einerseits und an gute Abdichtung andererseits wird durch unterschiedliche Materialien für die Tragschicht und für die Gleitschicht und somit auch für die Dichtlippe Rechnung getragen. Insgesamt wird eine besser belastbare Gleitlagerbuchse geschaffen, die gleichzeitig eine optimale Abdichtung gewährleistet.

Ein weiterer Vorteil besteht darin, dass die Gesamtwanddicke kleiner gewählt werden kann, als bei den aus dem Stand der Technik bekannten Gleitlagerbuchsen. Dünnwandige Gleitlagerbuchsen mit einer Wandstärke von 1,6 mm bei einem Nenninnendurchmesser von z.B. 25 mm sind möglich.

Da die Dichtlippen integraler Bestandteil der Gleitschicht sind, entfällt der Einbau separater Dichtelemente, was die Herstellung der Gleitlagerbuchse vereinfacht. Ein weiterer Vorteil besteht darin, dass die Dichtlippen aus Gleitlagermaterial bestehen, so dass diese auch denselben Reibungskoeffizienten besitzen wie die Gleitschicht. Der Einbau entsprechender Dichtungselemente mit entsprechend angepasstem Reibungskoeffizienten entfällt.

Die Ringnut hat den Vorteil, dass ein Raum vorhanden ist, in den das Gleitschichtmaterial der Dichtlippen federnd ausweichen kann und somit auch unter Belastung durch die Welle immer dicht an der Welle anliegt. Das Tragschichtmaterial nimmt an der Federbewegung nicht teil und kann aus einem steiferen Material bestehen.

Die Ringnut hat den weiteren Vorteil, dass mittels eines geeigneten Werkzeugs, das in die Ringnut eingreift und im Zusammenhang mit dem Herstellungsverfahren eingehender beschrieben wird, der Überstand der Dichtlippen gegenüber der inneren Umfangsfläche gezielt eingestellt werden kann. Die Dichtlippe trägt zur Verlängerung der Lebensdauer der Gleitlagerbuchse bei, weil das Eindringen von Partikeln in den Zwischenraum zwischen Gleitlagerbuchse und Welle weitgehend verhindert wird.

Die Ringnut kann verschiedene Querschnitte aufweisen.

Vorzugsweise weist die Ringnut einen dreieckförmigen Querschnitt auf. Der Vorteil liegt darin, dass im Vergleich zu einer Ringnut mit z.B. einem rechteckigen Querschnitt weniger Material entfernt werden muss, so dass sowohl die Tragschicht als auch die Gleitschicht nicht oder nur unwesentlich geschwächt wird. Eine keilförmige Ringnut hat den weiteren Vorteil, dass das Werkzeug, insbesondere der Stempel, für den Umformvorgang leichter positioniert werden kann und die umzuformende Gleitschicht zum Nutgrund hin dicker wird, was die Stabilität erhöht.

Vorzugsweise liegt der Nutgrund in der Grenzfläche zwischen Tragschicht und Gleitschicht oder in der Gleitschicht. Bei einem dreieckförmigen Querschnitt der Ringnut ist der Nutgrund im wesentlichen spitz ausgeführt. Es ist von Vorteil, wenn die Spitze des Nutgrundes in der Grenzfläche liegt, weil dadurch sichergestellt ist, dass nur Material der Gleitschicht zur Dichtlippe umgeformt werden muss und die Tragschicht nicht beeinträchtigt wird.

Liegt die Spitze des Nutgrundes hingegen in der Tragschicht, wird der Umformvorgang erschwert, weil das Trägermaterial dann auch Bestandteil der Dichtlippe ist. Dadurch werden möglicherweise die elastischen Eigenschaften der gesamten Dichtlippe beeinträchtigt.

Liegt die Spitze des Nutgrundes innerhalb der Gleitschicht, geht dies zu Lasten der Dicke der Dichtlippe, was zwar die Stabilität der Dichtlippe beeinflusst, andererseits aber die federnde Eigenschaft der Dichtlippe verbessert.

Vorzugsweise beträgt der Öffnungswinkel $\beta$ der Ringnut 30° bis 60°, besonders bevorzugt 40° bis 50°.

Die Nuttiefe $N_T$ beträgt vorzugsweise 1 mm bis 6 mm für Gleitlagerbuchsen mit einem Innennenndurchmesser von 25 mm bis 1000 mm.

Die Gleitschicht erstreckt sich vorzugsweise über die gesamte Innenfläche der Tragschicht. Die Gleitschicht ist vorteilhafterweise eine geschlossene Schicht.

Vorzugsweise geht die innere Umfangsfläche der Gleitschicht an den beiden axialen Enden der Gleitlagerbuchse jeweils in eine, in radiale Richtung ansteigende Randfläche über, die mit der jeweiligen Stirnfläche der Gleitlagerbuchse eine Abstreifkante bildet. Die radiale Richtung bezieht sich auf den Radius der vorzugsweise zylinderförmigen Gleitlagerbuchse. Die Randfläche steigt vorzugsweise kontinuierlich ausgehend von der inneren Umfangsfläche nach innen an.

Vorzugsweise ist die Randfläche gekrümmt. Die Randfläche kann einen konstanten Krümmungsradius oder einen sich verändernden Krümmungsradius aufweisen, was die Stabilität und die Federeigenschaften der Dichtlippe gegenüber einer abgewinkelten Dichtlippe begünstigt.

Vorzugsweise weist die Gleitschicht eine Dicke $G_{D1}$ auf, die sich in der Dichtlippe in Richtung der Stirnfläche auf eine Dicke $G_{D2}$ verringert. Die Dicke $G_{D2}$ beträgt vorzugsweise $0,2 \times G_{D1} < G_{D2} < G_{D1}$. Je geringer die Dicke $G_{D2}$ ist, desto elastischer ist die Dichtlippe. Weiter bevorzugte Bereiche sind $0,2 \times G_{D1} < G_{D2} < 0,9 \times G_{D2}$ und $0,2 \times G_{D1} < G_{D2} < 0,8 \times G_{D1}$.

Die Tragschicht weist vorzugsweise eine Dicke $T_{D1}$, die sich im Bereich der Ringnut in Richtung der Stirnfläche auf eine Dicke $T_{D2} < T_{D1}$ verringert.

Der Nenninnendurchmesser $D_{Nenn}$ der Gleitlagerbuchse beträgt vorzugsweise 25 mm bis 1000 mm, besonders bevorzugt 50 mm bis 200 mm.

Vorzugsweise gilt für die Differenz $\Delta = D_{Nenn} - D_L$ die Beziehung $2 \times LS < \Delta < 5 \times LS$, wobei $D_L$ den Innendurchmesser an der Abstreifkante, LS das Lagerspiel $LS = \frac{1}{2} \times (D_{Nenn} - D_{Welle})$ bei nicht belasteter Welle und $D_{Welle}$ den Außendurchmesser einer von der Gleitlagerbuchse aufgenommenen Welle bezeichnet.

Wenn $\Delta > 2\,LS$ ist, liegt die Dichtlippe mit Druck an der Außenseite der Welle an. Je größer $\Delta$ gewählt wird, desto größer ist der Anpressdruck der Dichtlippe. Sobald die Welle belastet wird, entfernt sich die Längsachse der Welle von der Längsachse der Gleitlagerbuchse, so dass das Lagerspiel auf der belasteten Seite der Gleitlagerbuchse abnimmt und sich auf der unbelasteten Seite vergrößert. Um das Eindringen von Partikeln zu verhindern, ist es wichtig, dass die Dichtlippe diese Veränderungen mitmacht und entsprechend ausweicht bzw. entsprechend nachfedert, so dass die Dichtlippe am gesamten Umfang der Welle anliegt.

Es ist deshalb bevorzugt, wenn gilt $2,5 \times LS < \Delta < 5 \times LS$, insbesondere $2,8 \times LS < \Delta < 5 \times LS$.

Typische Werte der Gleitlagerbuchse sind in der nachfolgenden Tabelle 1 zu finden:

| $D_{Nenn}$ (mm) | $D_L$ (mm) | $\Delta$ (mm) | $T_{D1}$ | $T_{D2}$ | $G_{D1}$ | $G_{D2}$ | $N_T$ | $\beta$ |
|---|---|---|---|---|---|---|---|---|
| 25 | 24,5 | 0,5 | 1,9 | 1,4 | 0,6 | 0,1 | 1,5 | 40° |
| 50 | 49,5 | 0,5 | 3,0 | 2,25 | 1,0 | 0,25 | 2 | 40° |
| 70 | 69,5 | 0,5 | 4,0 | 3,25 | 1,0 | 0,25 | 2 | 40° |
| 100 | 99,5 | 0,5 | 6,5 | 5,75 | 1,0 | 0,25 | 2 | 40° |
| 150 | 149,5 | 0,5 | 6,0 | 5,9 | 1,5 | 0,4 | 3 | 40° |

(fortgesetzt)

| $D_{Nenn}$ (mm) | $D_L$ (mm) | $\Delta$ (mm) | $T_{D1}$ | $T_{D2}$ | $G_{D1}$ | $G_{D2}$ | $N_T$ | $\beta$ |
|---|---|---|---|---|---|---|---|---|
| 200 | 199,5 | 0,5 | 8,5 | 7,4 | 1,5 | 0,4 | 3 | 40° |

Vorzugsweise besteht die Tragschicht aus einer Wickellage, die mit Glasfasern und/oder Kohlenstofffasern verstärktes Epoxidharz aufweist.

Die Gleitschicht besteht vorzugsweise aus einer Wickellage, die mit Kunststofffilamenten verstärktes Epoxidharz aufweist. Die Kunststofffilamente sind vorzugsweise nicht oder wenig abrasiv. Das Epoxidharz kann Festschmierstoffe enthalten.

Eine Wickellage bezeichnet eine Schicht, die durch Aufwickeln mindestens eines in Epoxidharz getränkten Fadens, vorzugsweise in Kreuzwickeltechnik, hergestellt wird.

Ein Filament ist in der textilen Terminologie die Bezeichnung für Fasern mit praktisch unbegrenzter Länge. Unter einem Faden wird eine Textilie aus mehreren miteinander verbundenen oder verdrehten Fasern verstanden.

Kohlenstofffasern, die auch als Carbonfasern bezeichnet werden, sind industriell hergestellte Fasern aus kohlenstoffhaltigen Ausgangsmaterialien, die durch an den Rohstoff angepasste chemische Reaktionen in graphitartig angeordneten Kohlenstoff umgewandelt werden. Anisotrope Kohlenstofffasern zeigen hohe Festigkeiten und Steifigkeiten bei gleichzeitig geringer Bruchdehnung in axialer Richtung.

Das Gleitschichtmaterial hat einerseits gute Gleiteigenschaften und eine hohe Verschleißbeständigkeit und besitzt andererseits auch gute elastische Eigenschaften, was im Bereich der Dichtlippen von Vorteil ist, um bei wechselnder Belastung eine gute Abdichtung der Welle zu gewährleisten.

Das Verfahren sieht vor, dass zur Herstellung einer Gleitlagerbuchse die folgenden Schritte zeitlich nacheinander ausgeführt werden:

a) Herstellen eines Rohlings einer Gleitlagerbuchse mit Tragschicht, Gleitschicht und Nenninnendurchmesser $D_{Nenn}$,

b) Eindrehen einer Ringnut mit Nutgrund und Nutflanken zwischen Tragschicht und Gleitschicht in mindestens einer Stirnfläche des Rohlings,

c) Umformen des die Nutflanke der Ringnut bildenden Gleitschichtmaterials durch Aufweiten der Ringnut zu einer breiteren Ringnut und zur Ausbildung einer Dichtlippe und zur gleichzeitigen Reduktion des Nenninnendurchmessers $D_{Nenn}$ im Bereich der Dichtlippe.

Das Einbringen der Ringnut sowie das Umformen des Gleitschichtmaterials kann schnell und kostengünstig durchgeführt werden. Der Herstellungsaufwand ist geringer als bei der herkömmlichen Gleitlagerbuchse, bei der z.B. separate Dichtelemente zugekauft, entsprechende Aussparungen in die Gleitlagerbuchse eingearbeitet und die Dichtelemente in der Gleitlagerbuchse montiert werden müssen.

Beim Eindrehen der Ringnut wird sowohl Material der Tragschicht als auch der Gleitschicht entfernt.

Weiterhin sieht das Verfahren vorzugsweise vor, dass gemäß Schritt a) nacheinander folgende Teilschritte ausgeführt werden:

- zur Herstellung einer Gleitschicht wird mindestens ein mit Epoxidharz getränkter, Kunststofffilamente aufweisender Kunststofffaden auf einen Wickelkern aufgewickelt,

- zur Herstellung einer Tragschicht wird mindestens ein mit Epoxidharz getränkter Glasfaserfaden und/oder mindestens ein mit Epoxidharz getränkter Kohlenstofffaden auf die noch nicht ausgehärtete Gleitschicht aufgewickelt,

- die Materialien von Gleitschicht und Tragschicht werden zur Ausbildung eines Rohres gemeinsam ausgehärtet, und

- das Rohr wird vom Wickelkern entfernt und zu einem Rohling einer Gleitlagerbuchse weiterverarbeitet.

Der Begriff Epoxidharz schließt auch Epoxidharze mit Festschmierstoff ein.

Das Aushärten erfolgt vorzugsweise durch Erwärmen.

Vorzugsweise werden Polyesterfilamente als Kunststofffilamente verwendet.

Die verwendeten Polyesterfilamente haben den Vorteil, dass sie unter Wärmeeinwirkung schrumpfen. Die in Schritt c) bevorzugte Heißumformung, die für Polyesterfilamente vorzugsweise im Bereich von $T_G$ = 70°C bis $T_M$ = 250°C, besonders bevorzugt bei 120°C bis 250°C, insbesondere bei ca. 180°C durchgeführt wird, dient nicht nur der Plastifizierung sondern auch der Erzeugung einer Vorspannung in den Filamenten an den Buchsenenden. $T_G$ bezeichnet die Glasübergangstemperatur und $T_M$ die Schmelztemperatur des teilkristallisierten Polyestermaterials. Dadurch wird eine ausreichende Formstabilität und Vorspannung der Dichtlippen auch unter lang einwirkender Deformation der Dichtlippen erreicht.

Als Polyesterfilamente werden vorzugsweise Filamente aus Polyethylenterephtalat eingesetzt.

Vorzugsweise werden für den Schritt a) Kunststofffäden verwendet, die Polyesterfilamente und PTFE-Partikel aufweisen. Die eingelagerten PTFE-Partikel haben den Vorteil, dass das Gleitschichtmaterial sich mechanisch gut bearbeiten lässt. Die Kunststofffäden mit PTFE-Partikeln eignen sich daher insbesondere für Präzisionsgleitlager, die beispielsweise durch Bohren, Honen oder dergleichen auf Endmaß nachgearbeitet werden müssen. PTFE wirkt als Festschmierstoff und dient somit zur Verbesserung der tribologischen Eigenschaften des Gleitschichtmaterials.

Vorzugsweise beträgt der Anteil der PTFE-Partikel im Kunststofffaden 2 Gew.-% bis 40 Gew.-%, besonders bevorzugt 30 Gew.-% bis 36 Gew.-%.

Vorzugsweise werden Epoxidharze verwendet, die bei Temperaturen T > 120°C aushärten.

Vorzugsweise werden Bisphenol-basierte Epoxidharze verwendet.

Vorzugsweise wird ein Epoxidharz verwendet, das Graphit mit einem Anteil von 1 Gew.-% bis 40 Gew.-%, bezogen auf das Epoxidharz, enthält. Auch kann das Epoxidharz PTFE-Partikel mit einem Anteil von 1 Gew.-% bis 40 Gew.-%, bezogen auf das Epoxidmaterial enthalten.

Vorzugsweise wird gemäß Schritt b) die Ringnut mittels eines Stech-oder Drehmeißels eingedreht.

Gemäß Schritt c) wird das Umformen als Heißumformen durchgeführt, so dass die bereits beschriebene Vorspannung der Kunststofffilamente eingestellt werden kann.

Vorzugsweise wird das Heißumformen bei einer Temperatur T durchgeführt, für die $T_G < T < T_M$ gilt, wobei $T_G$ die Glasübergangstemperatur und $T_M$ die Schmelztemperatur der Kunststofffilamente bezeichnet.

Vorzugsweise wird gemäß Schritt c) ein ringförmiger Stempel, der eine konische Innenfläche aufweist, die in die in der Stirnfläche befindliche Ringnut des Rohlings gedrückt wird. Es ist somit nur ein Arbeitsgang erforderlich, um die umlaufende Dichtlippe herzustellen.

Vorzugsweise nimmt die konische Fläche mit einer Parallelen P zur Längsachse $L_2$ des Stempels einen Winkel $\gamma$ ein. Der Winkel $\gamma$ wird vorzugsweis größer gewählt als $\alpha/2$, weil sich während des Umformens und des anschließenden Abkühlens der Dichtlippe aufgrund des Schrumpfvorganges der Kunststofffilamente der Öffnungswinkel der Ringnut wieder etwas verringert.

Gemäß einer alternativen Ausführungsform kann ein mit einer Pressfläche versehener Stempel gegen die Nutflanke der Ringnut gedrückt werden und gleichzeitig der Rohling relativ zum Stempel kontinuierlich gedreht werden. Vorzugsweise ist die Pressfläche des Stempels eine runde oder eine konische Fläche.

Die erfindungsgemäße Gleitlagerbuchse wird vorzugsweise in einer Umgebung mit abrasiven Partikeln, insbesondere Sandkörnern verwendet.

Die Gleitlagerbuchse wird bevorzugt in landwirtschaftlichen Maschinen, Baumaschinen oder Nutzfahrzeugen verwendet.

Beispielhafte Ausführungsformen der Erfindung werden nachfolgend anhand der Zeichnungen näher erläutert.

Es zeigen

Figur 1            eine dreidimensionale Darstellung einer Gleitlagerbuchse,

Figur 2a           einen Längsschnitt gemäß der Linie A-A durch die in Figur 1 gezeigte Gleitlagerbuchse,

Figur 2b           einen Längsschnitt der Gleitlagerbuchse gemäß der Figur 2a mit eingesetzter, unbelasteter Welle,

Figur 2c           einen Längsschnitt der Gleitlagerbuchse gemäß der Figur 2a mit teil-belasteter Welle,

Figur 2d           einen Längsschnitt der Gleitlagerbuchse gemäß der Figur 2a mit voll-belasteter Welle,

Figur 3            einen Ausschnitt auf die Draufsicht eines Rohlings der Gleitlagerbuchse beim Eindrehen der Ringnut,

Figur 4a bis 4c    verschiedene Schnittdarstellungen zur Erläuterung des Verfahrens zur Herstellung der Dichtlippen,

Figur 5            einen Ausschnitt auf die Draufsicht eines Rohlings zur Erläuterung eines alternativen Verfahrens zur Herstellung der Dichtlippen.

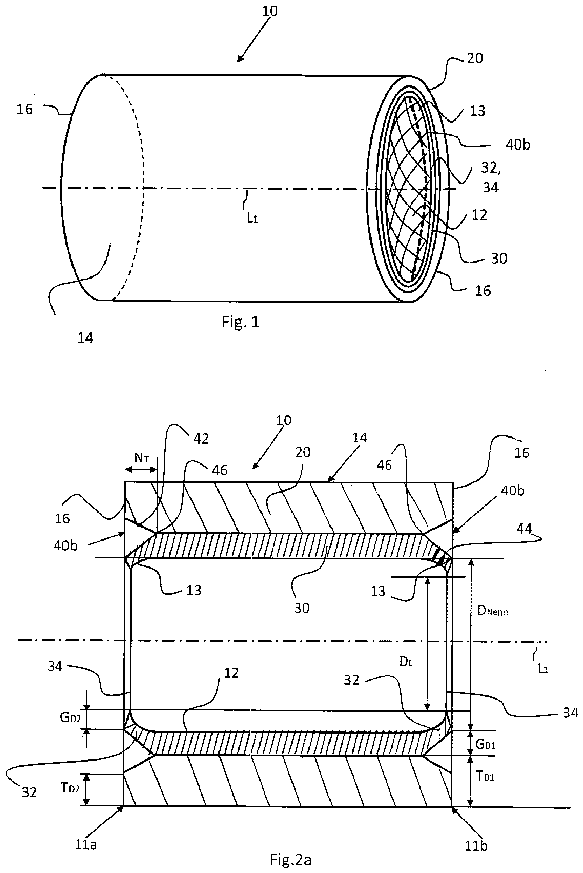

In der Figur 1 ist eine Gleitlagerbuchse 10 mit Längsachse $L_1$ dargestellt, die eine innere Umfangsfläche 12 und eine äußere Umfangsfläche 14 aufweist. Die Gleitlagerbuchse 10 besitzt eine außenliegende Tragschicht 20 und eine innenliegende Gleitschicht 30, die sich über die gesamte Innenfläche der Tragschicht 2 erstreckt. Beide Schichten 20, 30 sind in Kreuzwickeltechnik hergestellt worden, was durch die gekreuzten Linien angedeutet wird. In der Stirnfläche 16 befindet sich eine umlaufende Ringnut 40b. Die Gleitschicht 30 besitzt eine nach innen ansteigende Randfläche 13, wodurch eine Dichtlippe 32 gebildet wird, die eine Abstreifkante 34 aufweist.

In der Figur 2a ist ein Längsschnitt durch die in Figur 1 dargestellte Gleitlagerbuchse 10 dargestellt, um insbesondere den Randbereich und die Ausbildung der Dichtlippen 32 näher zu erläutern.

Die Gleitlagerbuchse 10 besitzt an beiden Stirnflächen 16 jeweils eine umlaufende Ringnut 40b, die im Querschnitt im wesentlichen dreieckförmig ausgebildet ist. Die Ringnut 40b weist eine erste Nutflanke 42 und eine zweite Nutflanke 44 sowie eine Nuttiefe $N_T$ auf. Der Nutgrund 46 markiert den Beginn der ringförmigen Dichtlippe 32, die gegenüber der Innenfläche 12 radial nach innen vorsteht. Die beiden Dichtlippen 32 sind integraler Bestandteil der Gleitschicht 30 und weisen eine nach innen gerichtete Krümmung auf. Die Gleitschicht 30 geht an beiden axialen Enden 11a,b kontinuierlich in die beiden Dichtlippen 32 über.

Die Tragschicht 20 weist eine Dicke $T_{D1}$ auf, die sich im Bereich der Ringnut 40b auf die Dicke $T_{D2}$ an den beiden axialen Enden 11a,b verjüngt.

Die Gleitschicht 30 weist eine Dicke $G_{D1}$ auf, die sich im Bereich der Dichtlippen 32 ebenfalls verjüngt und eine Dicke $G_{D2}$ annimmt.

Der Nenninnendurchmesser $D_{Nenn}$ der Gleitlagerbuchse 10 verringert sich an den Abstreifkanten 34 der beiden Dichtlippen 32 auf den Durchmesser $D_L$'.

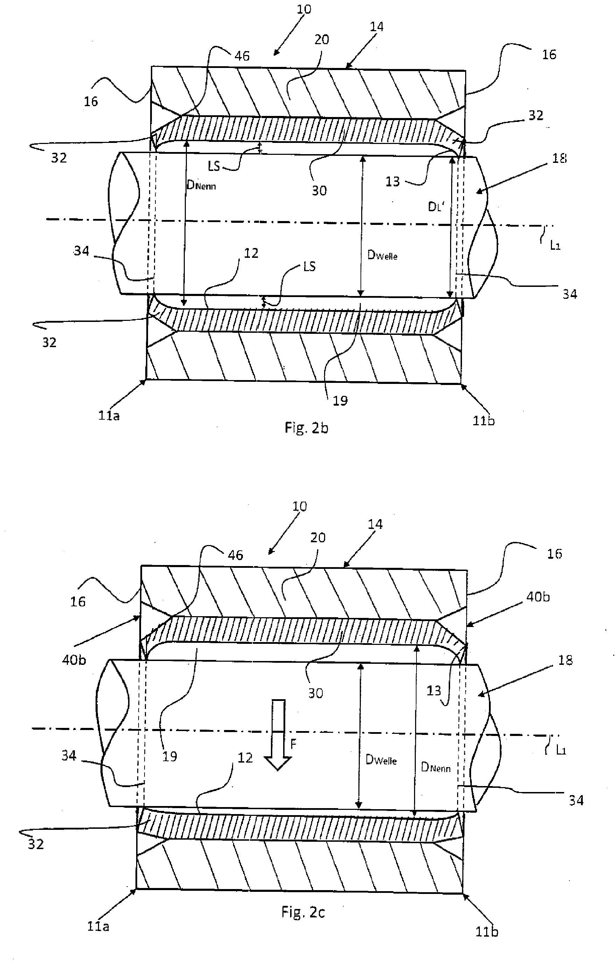

In der Figur 2b ist auch eine sich in Richtung der Längsachse $L_1$ erstreckende Welle 18 eingezeichnet, die mittels der Dichtlippen 32 abgedichtet wird. Die Welle besitzt einen Durchmesser $D_{Welle}$, der größer ist als der Durchmesser $D_L$ der unbelasteten Dichtlippen 32, so dass die Dichtlippen 32 an der Welle 18 mit Druck anliegen. Der Abstand zwischen der Innenfläche 12 der Gleitlagerbuchse 10 und der Außenfläche der Welle 18 wird als Lagerspiel LS bezeichnet. Für $\Delta = D_{Nenn} - D_L$ gilt $2 \times LS < \Delta$.

In der Figur 2c wird die Welle 18 mit einer Kraft F in Pfeilrichtung belastet, wodurch die Welle nach unten gedrückt wird. Die Dichtlippe 32 federt in dem unteren Bereich ebenfalls nach unten und weicht in die Ringnut 40b aus, deren Öffnungswinkel sich dadurch verkleinert. Gleichzeitig werden die Dichtlippen 32 in dem oberen Bereich entlastet, so dass diese aufgrund ihrer Federwirkung der Welle folgen und weiterhin eine gute Abdichtung des Innenraums 19 gewährleisten. Hierbei können die Dichtlippen 32 in die Ringnut 40b ausweichen.

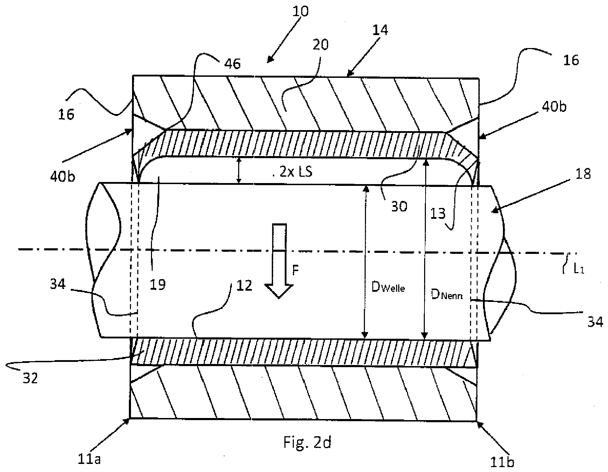

In der Figur 2d ist eine Situation dargestellt, in der die Welle 18 noch stärker belastet ist, so dass die Dichtlippen 32 im unteren Bereich vollständig nach unten gedrückt werden.

Die Welle 18 liegt unten an der Innenfläche 12 an, wobei der obere Abstand zwischen der Welle 18 und der Innenfläche 12 dem doppelten Lagerspiel LS entspricht. Da $\Delta > 2 \times LS$ ist, liegen die Dichtlippen 32 auch in dieser Extremsituation im oberen Bereich direkt an der Welle 18 an.

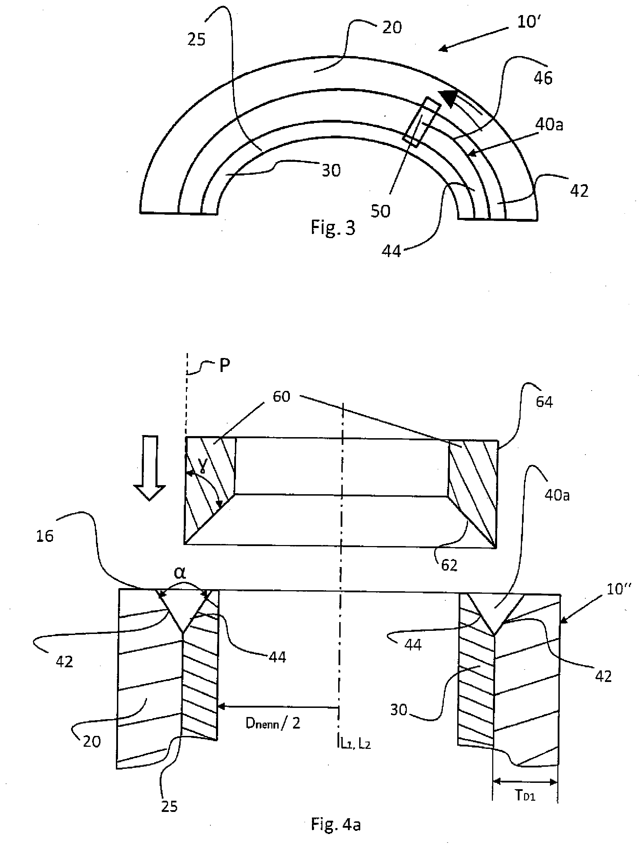

In der Figur 3 ist ein Ausschnitt einer Draufsicht auf die Stirnfläche 16 eines Rohlings 10' dargestellt. Mittels eines Dreh- oder Stechmeißels 50 wird im Bereich der Kontaktfläche 25 von Gleitschicht 30 und Tragschicht 20 eine Ringnut 40a eingebracht. Die Ringnut 40a ist keilförmig ausgebildet und besitzt Nutflanken 42 und 44. In der hier gezeigten Darstellung wird die Ringnut 40a durch Materialabtrag sowohl der Gleitschicht 30 als auch der Tragschicht 20 hergestellt.

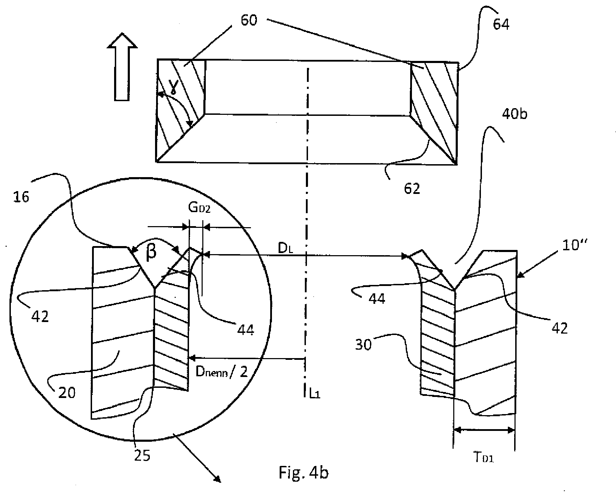

In der Figur 4a ist der Rohling 10" im Schnitt dargestellt, der dem Rohling 10' mit komplett eingebrachter Ringnut 40a mit Öffnungswinkel $\alpha$ entspricht. Über dem Rohling 10" ist ein beheizter Stempel 60 in Form eines Rings dargestellt, der eine konische Innenfläche 62 aufweist. Die konische Innenfläche 62 bildet mit der Außenfläche 64 des Stempels 60 bzw. mit der Parallelen P zur Längsachse $L_2$ des Stempels 60 einen Winkel $\gamma$, der größer ist als der halbe Öffnungswinkel $\alpha$ der Ringnut 40a. Der Außendurchmesser des Stempels 60 ist größer als der Durchmesser der Ringnut 40 am Nutgrund 46. Der Stempel 60 wird mit seiner konischen Fläche 62 in die Ringnut 40a in Pfeilrichtung eingeführt, wobei das Gleitschichtmaterial der Gleitschicht 30 durch die konische Innenfläche 62 nach innen gedrückt wird, wie dies in der Figur 4b dargestellt ist.

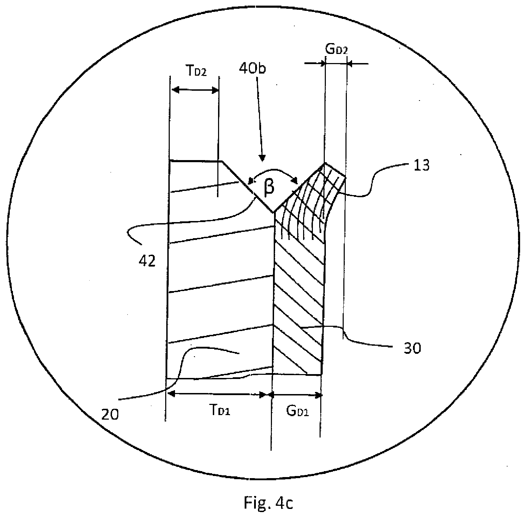

Die Verformung der Gleitschicht 30 nach dem Herausziehen des Stempels 60 ist in der Figur 4b dargestellt und in der Figur 4c ist die Dichtlippe 32 mit Ringnut 40b nochmals vergrößert abgebildet. Der Öffnungswinkel der Ringnut 40b wird mit $\beta$ bezeichnet, wobei $\beta > \alpha$ ist.

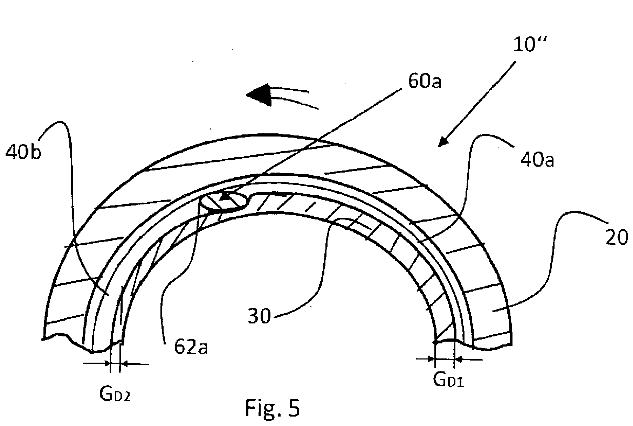

In der Figur 5 ist die Draufsicht auf einen Ausschnitt der Fläche des Rohlings 10" der Gleitlagerbuchse 10 dargestellt. Anstelle des ringförmigen Stempels 60 wird zur Aufweitung der Ringnut 40a ein beheizter Stempel 60a mit einer runden oder konischen Pressfläche 62a an der Flanke 42 der Ringnut 40a entlanggeführt. Bei feststehendem Stempel 60a wird hierzu der Rohling 10" in Pfeilrichtung gedreht.

1. Beispiel: Gleitlagerbuchse mit folgenden Abmessungen:

Außendurchmesser 85 mm
Länge 50 mm
Nenninnendurchmesser 70 mm

Die Gleitlagerbuchse ist aus dem gängigen Fertigungsablauf entnommen, d.h. Wickeln einer Gleitschicht in Kreuzwickeltechnik, anschließendes Überwickeln der Gleitschicht mit der Tragschicht, ebenfalls in Kreuzwickeltechnik, Angelieren und Aushärten sowie das Abschleifen, Ausdrehen und Zuschneiden des Rohlings auf die genannten Abmessungen.

Für die Herstellung der Tragschicht wurde ein in Epoxidharz getränkter Gasfaserfaden verwendet. Für die Herstellung der Gleitschicht wurde ein in Epoxidharz getränkter Kunststofffaden verwendet, der Polyesterfilamente und PTFE-Partikel enthielt.

Durch eine Drehbearbeitung mit einem Drehmeißel wurde die Ringnut an beiden Stirnseiten erzeugt.

Mit einem konischen Stempel, der auf ca. 180°C erwärmt ist und einen Außendurchmesser von 72 mm und einen Winkel $\gamma$ von 25° aufweist, wurde die Gleitschicht an den Enden der Gleitlagerbuchse umgeformt, so dass der Durchmesser $D_L$ = 69,55 betrug und somit um ca. 0,4 mm kleiner wurde als der Nenninnendurchmesser $D_{Nenn}$ (69,95 mm) der Gleitlagerbuchse.

In einem Prinzipversuch konnte die verbesserte Abdichtung gegen abrasive Partikel (Sand) nachgewiesen werden. Hierbei wurden eine Gleitlagerbuchse ohne Dichtungen und eine Gleitlagerbuchse mit denselben Abmessungen und mit den Enden zu Dichtlippen umgeformter Gleitschicht unter gleichen Prüfbedingungen getestet.

Die Gleitlagerbuchsen wurden hierbei in ein Gehäuse eingepresst, die Welle eingeschoben und per Hand wurde eine Schwenkbewegung der Welle ausgeführt. Währenddessen wurde auf die Stirnseiten der Gleitlagerbuchse und auf die angrenzende Wellenoberfläche ein Wasser-Sand-Gemisch kontinuierlich aufgesprüht. Beim Wasser-Sand-Gemisch lagen die Korngrößen des Sandes bei 20 bis 400 $\mu$m. Bei der Gleitlagerbuchse mit integrierter Dichtung an beiden Enden der Gleitlagerbuchse gelangten keine optisch erkennbaren Sandpartikel zur Welle.

2. Beispiel:

In die im 1. Beispiel beschriebene Gleitlagerbuchse wurde eine Welle eingesetzt, die mit 80 MPa belastet wurde.

In der nachfolgenden Tabelle sind die Innendurchmesser des Rohlings und die der Gleitlagerbuchse zusammengefasst. Die Innendurchmesser der Gleitlagerbuchse wurden nach der Herstellung im nicht eingebauten Zustand, im eingebauten Zustand und nach einer statischen Belastung mittels einer eingesetzten Welle gemessen.

Die eingesetzte Welle wurde über 30 min mit 80 MPa belastet (s. Figur 2d) und anschließend wurde die Welle ausgebaut und die Innendurchmesser wurden vermessen (Reihe 1-3).

Die Reihen 4 und 5 zeigen die Veränderungen der Innendurchmesser $D_L$ an den Dichtlippen. Die Differenzwerte in der letzten Spalte zeigen, dass nach der Belastung und nach dem Ausbau der Welle die Dichtlippen wieder zurückgefedert sind.

| | | | Rohling vor Eindrücken mit Stempel | Gleitlagerbuchse nach Eindrücken mit warmem (180°C) Stempel Winkel $\gamma$ 25° | Gleitlagerbuchse im eingepressten Zustand (im Gehäuse) | Gleitlagerbuchse nach statischer Belastung mit 80 MPa und ausgebauter Welle |
|---|---|---|---|---|---|---|
| 1. | $D_L$ am Ende 11a | [mm] | 70,282 | 69,466 | 69,401 | 69,781 |
| 2. | $D_{Nenn}$ in der Mitte der Gleitlagerbuchse | [mm] | 70,291 | 70,282 | 70,163 | 70,190 |
| 3. | $D_L$ am Ende 11 b | [mm] | 70,275 | 69,601 | 69,573 | 69,806 |
| 4. | $D_L$ (Gleitlagerbuchse) - $D_L$ (Rohling) am Ende 11a | [mm] | | -0,816 | -0,881 | -0,501 |
| 5. | $D_L$ (Gleitlagerbuchse) - $D_L$ (Rohling) am Ende 11b | [mm] | | -0,674 | -0,702 | -0,469 |

**Bezugszeichenliste**

| | |
|---|---|
| 10 | Gleitlagerbuchse |
| 10' | Rohling der Gleitlagerbuchse |
| 10" | Rohling mit Ringnut |
| 11a,b | axiales Ende |
| 12 | innere Umfangsfläche |
| 13 | Randfläche |
| 14 | äußere Umfangsfläche |
| 16 | Stirnfläche |
| 18 | Welle |
| 19 | Innenraum |

| | |
|---|---|
| 20 | Grenzschicht |
| 25 | Kontaktfläche |

| | |
|---|---|
| 30 | Gleitschicht |
| 32 | Dichtlippe |
| 34 | Abstreifkante |

| | |
|---|---|
| 40a | Ringnut nach dem Eindrehen |
| 40b | Ringnut nach dem Aufweiten |
| 42 | erste Nutflanke |
| 44 | zweite Nutflanke |
| 46 | Nutgrund |

| | |
|---|---|
| 50 | Stech- oder Drehmeißel |
| 60, 60a | Stempel |
| 62 | konische Innenfläche |
| 62a | Pressfläche |
| 64 | Außenfläche des Stempels |

| | |
|---|---|
| $D_{Nenn}$ | Innendurchmesser |
| $D_L$, $D_L'$ | Innendurchmesser an der Abstreifkante |
| $T_{D1}$ | Dicke der Tragschicht |
| $T_{D2}$ | Dicke der Tragschicht an der Ringnut |
| $G_{D1}$ | Dicke der Gleitschicht |
| $G_{D2}$ | Dicke der Gleitschicht an der Abstreifkante |
| $\alpha$ | Öffnungswinkel der Ringnut 40a |
| $\beta$ | Öffnungswinkel der Ringnut 40b |
| $\gamma$ | Winkel der konischen Fläche des Stempels |
| $L_1$ | Längsachse der Gleitlagerbuchse |
| $L_2$ | Längsachse des Stempels |
| $N_T$ | Nuttiefe |
| $D_{Welle}$ | Außendurchmesser der Welle |
| P | Parallele zu $L_2$ |

**Patentansprüche**

1. Gleitlagerbuchse (10)
   mit zwei Stirnflächen (16), wobei sich in mindestens einer Stirnfläche (16) wenigstens eine Ringnut (40b) mit einem Nutgrund (46) befindet,
   mit einer inneren Umfangsfläche (12) mit einem inneren Nenninnendurchmesser $D_{Nenn}$, und
   mit mindestens einer, an mindestens einem axialen Ende (11a,b) der Gleitlagerbuchse (10) gegenüber der inneren Umfangsfläche (12) nach innen vorstehenden Dichtlippe (32),

**dadurch gekennzeichnet,**
**dass** die Gleitlagerbuchse (10) eine Tragschicht (20) und eine Gleitschicht (30) aufweist, wobei die Tragschicht (20) und die Gleitschicht (30) unterschiedliche Materialien aufweisen,
**dass** sich die Ringnut (40b) zwischen der Tragschicht (20) und der Gleitschicht (30) befindet, und
**dass** die Dichtlippe (32) integraler Bestandteil der Gleitschicht (30) ist.

2. Gleitlagerbuchse nach Anspruch 1, **dadurch gekennzeichnet, dass** die Ringnut (40b) einen dreieckförmigen Querschnitt aufweist.

3. Gleitlagerbuchse nach einem der Ansprüche 1 oder 2, **dadurch gekennzeichnet, dass** der Nutgrund (46) in der Grenzfläche (25) zwischen Tragschicht (20) und Gleitschicht (30) oder in der Gleitschicht (30) liegt.

4. Gleitlagerbuchse nach einem der Ansprüche 1 bis 3, **dadurch gekennzeichnet, dass** die innere Umfangsfläche (12) an den beiden axialen Enden (11a,b)jeweils in eine in radialer Richtung ansteigende Randfläche (13) übergeht, die mit der jeweiligen Stirnfläche (16) eine Abstreifkante (34) bildet.

5. Gleitlagerbuchse nach einem der Ansprüche 1 bis 4, **dadurch gekennzeichnet, dass** die Gleitschicht (30) eine Dicke $G_{D1}$ aufweist, die sich in der Dichtlippe (32) in Richtung der Stirnfläche (16) auf eine Dicke $G_{D2}$ verringert.

6. Gleitlagerbuchse nach einem der Ansprüche 1 bis 5, **dadurch gekennzeichnet, dass** für die Differenz $\Delta = D_{Nenn} - D_L$ gilt:

$$2 \cdot LS < \Delta < 5 \cdot LS,$$

wobei $D_L$ den Innendurchmesser aus der Abstreifkante (34),
LS das Lagerspiel LS = ½ $(D_{Nenn} - D_{Welle})$ und $D_{Welle}$ den Außendurchmesser einer von der Gleitlagerbuchse (10) aufgenommenen Welle (8) bezeichnet.

7. Gleitlagerbuchse nach einem der Ansprüche 1 bis 6, **dadurch gekennzeichnet, dass** die Tragschicht (20) aus einer Wickellage besteht, die mit Glasfasern und/oder Kunststofffasern verstärktes Epoxidharz aufweist, und dass die Gleitschicht (30) aus einer Wickellage besteht, die mit Kunststofffilamenten verstärktes Epoxidharz aufweist.

8. Verfahren zur Herstellung einer Gleitlagerbuchse (10) mit folgenden Schritten, die zeitlich nacheinander ausgeführt werden:

a) Herstellen eines Rohlings (10') einer Gleitlagerbuchse (10) mit Tragschicht (20), Gleitschicht (30) und Nenninnendurchmesser $D_{Nenn}$,
b) Eindrehen einer Ringnut (40a) mit Nutgrund (46) und Nutflanken (42, 44) zwischen Tragschicht (2) und Gleitschicht (30) in mindestens einer Stirnfläche (16) des Rohlings (10'),
c) Umformen des die Nutflanke (42) der Nut (40a) bildenden Gleitschichtmaterials durch Aufweiten der Ringnut (40a) zu einer Ringnut (40b) und zur Ausbildung einer Dichtlippe (32) und zur gleichzeitigen Reduktion des Nenninnendurchmessers $D_{Nenn}$ im Bereich der Dichtlippe (32).

9. Verfahren nach Anspruch 8, **dadurch gekennzeichnet, dass** gemäß Schritt a) nacheinander folgende Teilschritte ausgeführt werden:

- zur Herstellung einer Gleitschicht (30) wird mindestens ein mit Epoxidharz getränkter, Kunststofffilamente aufweisender Kunststofffaden auf einen Wickelkern aufgewickelt,
- zur Herstellung einer Tragschicht (20) wird mindestens ein mit Epoxidharz getränkte Glasfaserfaden und/oder ein mit Epoxidharz getränkter Kohlenstofffaden auf die noch nicht ausgehärtete Gleitschicht (30) gewickelt,
- die Materialien von Tragschicht (20) und Gleitschicht (30) werden zur Ausbildung eines Rohres gemeinsam ausgehärtet, und
- das Rohr wird vom Wickelkern entfernt und zu einem Rohling (10') einer Gleitlagerbuchse (10) weiterverarbeitet.

10. Verfahren nach einem der Ansprüche 8 bis 9, **dadurch gekennzeichnet, dass** gemäß Schritt c) das Umformen als Heißumformen durchgeführt wird.

**11.** Verfahren nach einem der Ansprüche 8 bis 10, **dadurch gekennzeichnet, dass** gemäß Schritt c) ein ringförmiger Stempel (60), der eine konische Innenringfläche (62) aufweist, in die in der Stirnfläche (16) befindliche Nut (40a) des Rohlings gedrückt wird.

**12.** Verfahren nach einem der Ansprüche 8 bis 11, **dadurch gekennzeichnet, dass** die konische Fläche (62) mit einer Parallelen P zur Längsachse $L_2$ des Stempels (60) einen Winkel $\gamma$ einnimmt, wobei der Winkel $\gamma > \alpha/2$ ist.

**13.** Verfahren nach einem der Ansprüche 8 bis 12, **dadurch gekennzeichnet, dass** gemäß Schritt c) ein mit einer Pressfläche (62a) versehener Stempel (60a) gegen die Nutflanke (42) der Ringnut (40a) gedrückt wird und gleichzeitig der Rohling (10') relativ zum Stempel (60a) kontinuierlich gedreht wird.

**14.** Verwendung einer Gleitlagerbuchse (10) gemäß dem Anspruch 1 in einer Umgebung mit abrasiven Partikeln.

**15.** Verwendung der Gleitlagerbuchse (10) gemäß dem Anspruch 1 in landwirtschaftlichen Maschinen, Baumaschinen und Nutzfahrzeugen.

**Claims**

**1.** Plain bearing bush (10) comprising two end faces (16), at least one annular groove (40b) having a groove base (46) being located in at least one end face (16), comprising an inner circumferential surface (12) having an inner nominal inner diameter $D_{nominal}$, and comprising at least one sealing lip (32) which projects inwards relative to the inner circumferential surface (12) at at least one axial end (11a,b) of the plain bearing bush (10), **characterised in that** the plain bearing bush (10) has a support layer (20) and a sliding layer (30), the support layer (20) and the sliding layer (30) having different materials, **in that** the annular groove (40b) is located between the support layer (20) and the sliding layer (30), and **in that** the sealing lip (32) is an integral component of the sliding layer (30).

**2.** Plain bearing bush according to claim 1, **characterised in that** the annular groove (40b) has a triangular cross section.

**3.** Plain bearing bush according to either claim 1 or claim 2, **characterised in that** the groove base (46) is in the interface (25) between the support layer (20) and the sliding layer (30), or in the sliding layer (30).

**4.** Plain bearing bush according to any one of claims 1 to 3, **characterised in that** the inner circumferential surface (12) transitions into an edge surface (13) at the two axial ends (11a,b), which edge surface rises in the radial direction and forms a wiping edge (34) together with the relevant end face (16).

**5.** Plain bearing bush according to any one of claims 1 to 4, **characterised in that** the sliding layer (30) has a thickness $G_{D1}$, which decreases in the sealing lip (32) in the direction of the end face (16) to a thickness $G_{D2}$.

**6.** Plain bearing bush according to any one of claims 1 to 5, **characterised in that** for the difference $\Delta = D_{Nominal} - D_L$, the following applies:

$$2 \cdot LS < \Delta < 5 \cdot LS,$$

where $D_L$ is the inner diameter of the wiping edge (34), LS is the bearing clearance $LS = \frac{1}{2}(D_{Nominal} - D_{Shaft})$ and $D_{Shaft}$ is the outer diameter of a shaft (8) received by the plain bearing bush (10).

**7.** Plain bearing bush according to any one of claims 1 to 6, **characterised in that** the support layer (20) comprises a winding layer which has epoxy resin which is reinforced using glass fibres and/or plastics material fibres, and **in that** the sliding layer (30) comprises a winding layer which has epoxy resin which is reinforced using plastics filaments.

**8.** Method for producing a plain bearing bush (10) comprising the following steps, which are carried out in succession:

   a) producing a blank (10') of a plain bearing bush (10) comprising a support layer (20), a sliding layer (30) and a nominal internal diameter $D_{Nominal}$,
   b) turning an annular groove (40a), which comprises a groove base (46) and groove flanks (42, 44), between the support layer (2) and the sliding layer (30) in at least one end face (16) of the blank (10'),

c) shaping the sliding layer material which forms the groove flank (42) of the groove (40a) by expanding the annular groove (40a) into an annular groove (40b), and shaping the material in order to form a sealing lip (32) and reduce the nominal inner diameter $D_{Nominal}$ in the region of the sealing lip (32) at the same time.

9. Method according to claim 8, **characterised in that** according to step a), the following sub-steps are carried out successively:

- in order to produce a sliding layer (30), at least one plastics thread, which is impregnated with epoxy resin and has plastics filaments, is wound onto a winding core,
- in order to produce a support layer (20), at least one glass fibre thread which is impregnated with epoxy resin and/or a carbon thread which is impregnated with epoxy resin is wound onto the not yet cured sliding layer (30),
- the materials of the support layer (20) and the sliding layer (30) are cured together in order to form a tube, and
- the tube is removed from the winding core and further processed into a blank (10') of a plain bearing bush (10).

10. Method according to either claim 8 or claim 9, **characterised in that** according to step c), the shaping is carried out as hot shaping.

11. Method according to any one of claims 8 to 10, **characterised in that** according to step c), an annular punch (60) which has a conical inner annular surface (62) is pressed into the groove (40a) of the blank that is located in the end face (16).

12. Method according to any one of claims 8 to 11, **characterised in that** the conical surface (62) assumes an angle $\gamma$ which has a parallel P to the longitudinal axis $L_2$ of the punch (60), where the angle is $\gamma > \alpha/2$.

13. Method according to any one of claims 8 to 12, **characterised in that** according to step c), a punch (60a) provided with a pressing surface (62a) is pressed against the groove flank (42) of the annular groove (40a), and the blank (10') is continuously rotated relative to the punch (60a) at the same time.

14. Use of a plain bearing bush (10) according to claim 1 in an environment which has abrasive particles.

15. Use of the plain bearing bush (10) according to claim 1 in agricultural machinery, construction machinery and commercial vehicles.

**Revendications**

1. Coussinet lisse (10)
avec deux faces frontales (16), au moins une rainure annulaire (40b) comportant un fond de rainure (46) se trouvant dans au moins une face frontale (16),
avec une surface périphérique intérieure (12) ayant un diamètre intérieur nominal $D_{Nenn}$ et
avec au moins une lèvre d'étanchéité (32) qui fait saillie vers l'intérieur par rapport à la surface périphérique intérieure (12) à au moins une extrémité axiale (11a,b) du coussinet lisse (10),
**caractérisé en ce**
**que** le coussinet lisse (10) présente une couche de support (20) et une couche de glissement (30), la couche de support (20) et la couche de glissement (30) présentant des matériaux différents,
**que** la rainure annulaire (40b) se trouve entre la couche de support (20) et la couche de glissement (30) et
**que** la lèvre d'étanchéité (32) fait partie intégrante de la couche de glissement (30).

2. Coussinet lisse selon la revendication 1, **caractérisé en ce que** la rainure annulaire (40b) présente une section transversale triangulaire.

3. Coussinet lisse selon l'une des revendications 1 ou 2, **caractérisé en ce que** le fond de rainure (46) est situé dans la surface limite (25) entre la couche de support (20) et la couche de glissement (30) ou dans la couche de glissement (30).

4. Coussinet lisse selon l'une des revendications 1 à 3, **caractérisé en ce qu'**aux deux extrémités axiales (11a,b), la surface périphérique intérieure (12) se prolonge chaque fois en une surface de bord (13) qui s'élève dans la direction radiale et forme une arête de raclage (34) avec la surface frontale respective (16).

5. Coussinet lisse selon l'une des revendications 1 à 4, **caractérisé en ce que** la couche de glissement (30) présente une épaisseur $G_{D1}$ qui se réduit à une épaisseur $G_{D2}$ dans la lèvre d'étanchéité (32) en direction de la face frontale (16).

6. Coussinet lisse selon l'une des revendications 1 à 5, **caractérisé en ce que** pour la différence $\Delta = D_{Nenn} - D_L$, il s'applique :

$$2 \cdot LS < \Delta < 5 \cdot LS,$$

où $D_L$ est le diamètre intérieur à partir de l'arête de raclage (34),
LS est le jeu de palier LS = 1/2 $(D_{Nenn} - D_{Welle})$ et $D_{Welle}$ le diamètre extérieur d'un arbre (8) logé dans le coussinet lisse (10).

7. Coussinet lisse selon l'une des revendications 1 à 6, **caractérisé en ce que** la couche de support (20) est constituée d'une couche d'enroulement qui présente une résine époxy renforcée par des fibres de verre et/ou des fibres de matière plastique, et que la couche de glissement (30) est constituée d'une couche d'enroulement qui présente une résine époxy renforcée par des filaments de matière plastique.

8. Procédé de fabrication d'un coussinet lisse (10) comportant les étapes suivantes, qui sont effectuées successivement dans le temps :

   a) fabrication d'une ébauche (10') d'un coussinet lisse (10) présentant une couche de support (20), une couche de glissement (30) et un diamètre intérieur nominal $D_{Nenn}$,
   b) tournage d'une rainure annulaire (40a) comportant un fond de rainure (46) et des flancs de rainure (42, 44) entre la couche de support (2) et la couche de glissement (30) dans au moins une face frontale (16) de l'ébauche (10'),
   c) formage du matériau de la couche de glissement formant le flanc de rainure (42) de la rainure (40a) par élargissement de la rainure annulaire (40a) en une rainure annulaire (40b) et pour former une lèvre d'étanchéité (32) avec réduction simultanée du diamètre intérieur nominal $D_{Nenn}$ dans la zone de la lèvre d'étanchéité (32).

9. Procédé selon la revendication 8, **caractérisé en ce que**, selon l'étape a), les sous-étapes suivantes sont effectuées successivement :

   - pour fabriquer une couche de glissement (30), au moins un fil de matière plastique imprégné de résine époxy et présentant des filaments de matière plastique est enroulé sur un noyau d'enroulement,
   - pour fabriquer une couche de support (20), au moins un fil de fibre de verre imprégné de résine époxy et/ou un fil de carbone imprégné de résine époxy est enroulé sur la couche de glissement non encore durcie (30),
   - les matériaux de la couche de support (20) et de la couche de glissement (30) sont durcis ensemble pour former un tube et
   - le tube est retiré du noyau d'enroulement et transformé en une ébauche (10') d'un coussinet lisse (10).

10. Procédé selon l'une des revendications 8 à 9, **caractérisé en ce que**, selon l'étape c), le formage est effectué par thermoformage.

11. Procédé selon l'une des revendications 8 à 10, **caractérisé en ce que**, selon l'étape c), un poinçon annulaire (60) présentant une surface annulaire intérieure conique (62) est pressé dans la rainure (40a) de l'ébauche se trouvant dans la face frontale (16).

12. Procédé selon l'une des revendications 8 à 11, **caractérisé en ce que** la surface conique (62) fait un angle $\gamma$ avec une parallèle P à l'axe longitudinal $L_2$ du poinçon (60), l'angle $\gamma$ étant > $\alpha/2$.

13. Procédé selon l'une des revendications 8 à 12, **caractérisé en ce que**, selon l'étape c), un poinçon (60a) muni d'une surface de pression (62a) est pressé contre le flanc de rainure (42) de la rainure annulaire (40a) et, en même temps, l'ébauche (10') est continuellement tournée par rapport au poinçon (60a).

**14.** Utilisation d'un coussinet lisse (10) selon la revendication 1 dans un environnement présentant des particules abrasives.

**15.** Utilisation du coussinet lisse (10) selon la revendication 1 dans des machines agricoles, des engins de chantier et des véhicules utilitaires.

Fig. 1

Fig.2a

Fig. 2b

Fig. 2c

. 2x LS

F

$D_{Welle}$

$D_{Nenn}$

$L_1$

Fig. 2d

Fig. 3

Fig. 4a

Fig. 4b

Fig. 4c

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3412562 C2
- DE 4401526 C1
- US 8770844 B2
- US 3527507 A
- US 5018752 A